Europäisches Patentamt

European Patent Office

Office européen des brevets

(19)

(11) Veröffentlichungsnummer: **0 284 839**
**B1**

(12) **EUROPÄISCHE PATENTSCHRIFT**

(45) Veröffentlichungstag der Patentschrift:
20.06.90

(51) Int. Cl.⁵: **B65G 69/24**

(21) Anmeldenummer: 88103602.4

(22) Anmeldetag: 08.03.88

(54) Überladebrücke für Rampen.

(30) Priorität: 16.03.87 DE 3708446

(43) Veröffentlichungstag der Anmeldung:
05.10.88 Patentblatt 88/40

(45) Bekanntmachung des Hinweises auf die Patenterteilung:
20.06.90 Patentblatt 90/25

(84) Benannte Vertragsstaaten:
AT BE CH DE ES FR GB GR IT LI LU NL SE

(56) Entgegenhaltungen:
DE-A- 3 010 209

(73) Patentinhaber: Alten, Kurt, Ringstrasse 14,
D-3015 Wennigsen(DE)

(72) Erfinder: Alten, Kurt, Ringstrasse 14,
D-3015 Wennigsen(DE)

(74) Vertreter: Depmeyer, Lothar, Auf der Höchte 30,
D-3008 Garbsen 1(DE)

ACTORUM AG

## Beschreibung

Die Erfindung betrifft Überladebrücken nach dem Gattungsbegriff des Patentanspruchs 1.

Bei diesen Brücken (DE-A 3 010 209) ist der Hubzylinder zum Verschwenken der Brückenplatte nur mit einem unten liegenden Druckanschluss versehen; er wird beaufschlagt, wenn die Brückenplatte nach oben verschwenkt werden soll. Ein Absenken der Brückenplatte erfolgt dabei aufgrund des Eigengewichtes der Brückenplatte, indem das Druckmittel aus dem Hubzylinder verdrängt wird. Eine solche Absenkbewegung setzt bei den bekannten Brücken besondere Steuer- und Schaltmittel voraus.

Der Erfindung liegt im wesentlichen die Aufgabe zugrunde, die eingangs erwähnten Überladebrücken so auszubilden, dass die erwähnten Steuer- und Schaltmittel besonders einfach im Zusammenwirken mit den beiden Druckleitungen der Reversierpumpe ausgeführt werden können.

Zur Lösung dieser Aufgabe ist erfindungsgemäss das Rückflussventil des Hubzylinders hydraulisch verschliessbar, zudem ist der Betätigungsanschluss des Rückflussventils mit den beiden Zuleitungen des Vorschubzylinders verbunden.

Zweckmässigerweise sind dabei die beiden Zuleitungen über Rückschlagventile direkt oder indirekt mit dem erwähnten Betätigungsanschluss verbunden, damit beim Lauf der Pumpe in einer Richtung z.B. ein Ausfahren und beim Lauf in der entgegengesetzten Richtung ein Einfahren der Verlängerung erfolgen kann bzw. durch die Steuerung und Beaufschlagung des Rückflussventils die beiden Leitungen des Vorschubzylinders hydraulisch unabhängig voneinander betrieben werden können.

Eine solche Ausbildung erübrigt Schaltelemente zur Betätigung des Rückflussventils; insb. kommen die meist benutzten Magnetventile in Fortfall.

Aufgrund der Erfindung ist es ferner möglich, in einer Drehrichtung der Pumpe sowohl den Vorschubzylinder als auch den Hubzylinder zu betätigen, was insb. dann erwünscht ist, wenn die Verlängerung eingefahren und dabei die Brückenplatte angehoben werden muss. Dabei wird aufgrund der Erfindung die Zuleitung zum Vorschubzylinder mit dem vollen Druck beaufschlagt, während die Zuleitung für den Hubzylinder mit einer Drossel in der Weise versehen wird, dass die von der Zuleitung des Vorschubzylinders abgezweigte Leitung zum Rückflussventil in gleicher Weise mit vollem Druck beaufschlagt ist, damit ein ausreichend grosser Betätigungsdruck für das Rückflussventil gegeben ist.

Weitere Einzelheiten der in den Ansprüchen definierten Erfindung werden anhand der Zeichnung erläutert, in der ein Ausführungsbeispiel der Erfindung dargestellt ist. Es zeigen .

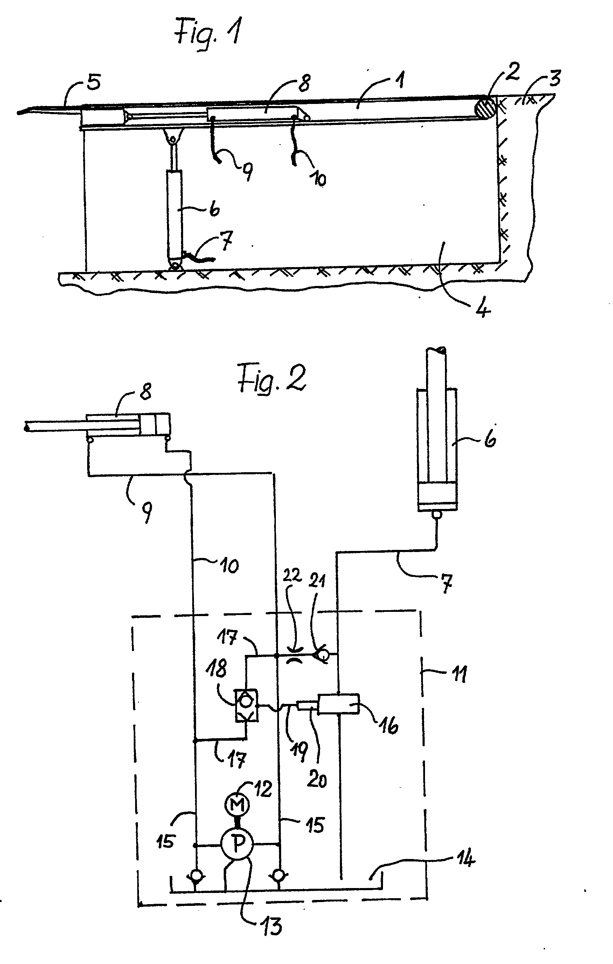

Fig. 1 einen senkrechten Längsschnitt durch eine Überladebrücke für Rampen bei ausgefahrener Verlängerung und

Fig. 2 den Hydraulikplan der Brücke gemäss Fig. 1.

Die Überladebrücke hat eine Brückenplatte 1, die rampenseitig über eine waagerechte Achse 2 an der Rampe 3 verschwenkbar gelagert ist und sich in einer ihrer Grösse entsprechenden Rampenausnehmung 4 befindet, die sie durch Hochschwenken verlassen kann, in die sie aber auch eintauchen kann. Am freien Ende der Brückenplatte 1 befindet sich eine längs zur Brückenplatte 1 verschiebbare Verlängerung 5 zur Auflage auf der zu be- bzw. entladenden Plattform zum Beispiel eines LKW.

Zum Hochschwenken der Brückenplatte 1 dient ein Hubzylinder 6 mit Zuleitung 7; zum Verschieben der Verlängerung 5 wird ein Vorschubzylinder 8 benutzt, der eine Zuleitung 9 zum Einfahren und eine Zuleitung 10 zum Ausfahren der Verlängerung 5 hat. Die Zuleitungen 7, 9 und 10 sind an ein Hydraulikaggregat 11 angeschlossen, das eine durch Elektromotor 12 antreibbare, z.B. als Zahnradpumpe ausgeführte, reversierbare und in beiden Drehrichtungen fördernde Pumpe 13 aufweist.

Unterhalb der Pumpe 13 befindet sich ein Sammelbehälter 14 für das Drucköl.

Die beiden möglichen Druckleitungen 15 der Pumpe 13 sind mit den Zuleitungen 9, 10 verbunden. Demgemäss kann in einer Drehrichtung der Pumpe 13 die Verlängerung 5 ausgefahren und in der anderen Drehrichtung der Pumpe 13 die Verlängerung 5 eingefahren werden.

Das Absenken der Brückenplatte 1 erfolgt indessen durch ihr Eingengewicht, wobei das im Hubzylinder 6 befindliche Drucköl verdrängt und über das geöffnete Rückflussventil 16 und die Zuleitung 7 in den Sammel behälter 14 zurückgeführt wird. Vorzugsweise ist dieses Ventil 16 so ausgeführt, dass es es stets geöffnet ist, um einen Rückfluss zu gestatten.

Die beiden Zuleitungen 9, 10 stehen über eine Stichleitung 17 und ein Ventil 18 nach Art eines Doppelrückschlagventils - versehen mit drei Anschlüssen - und ferner eine Anschlussleitung 19 mit einem hydraulischen Betätigungselement 20 z.B. in Form eines Zylinders mit dem Rückflussventil 16 in Wirkverbindung in der Weise, dass aufgrund des Ventils 18 bei Druckbeaufschlagung einer der beiden Zuleitungen 9, 10 das Druckmittel nicht in die andere Zuleitung gelangt und über diese das Druckmittel abgeführt werden kann. Die Kugel innerhalb des Ventils 18 hat zwei Sitze und kann demgemäss die eine oder die andere Stichleitung 17 für einen Abfluss versperren.

Diese Ausbildung führt immer dann zu einer Betätigung des Rückflussventils 16 und damit zu einer Verhinderung des Rückflusses vom Hubzylinder 6, wenn entweder die Verlängerung 5 eingefahren oder ausgefahren wird.

Ausserdem ist noch eine Verbindung zwischen der Zuleitung 9 und der Zuleitung 7 vorgesehen. Diese Verbindung weist ein Rückschlagventil 21 auf, das einen Rückfluss von der Zuleitung 7 zur Zuleitung 9 unterbindet. Die Verbindungsleitung hat aber zudem noch eine Drossel 22. Sie bewirkt, dass bei einer Druckbeaufschlagung der Zuleitung 9 zum Einfahren der Verlängerung 5 die Zuleitung 7 zwar auch beaufschlagt wird, jedoch aufgrund der Drossel 22 in vermindertem Umfang. Der sich vor der Drossel 22 aufbauende Stau wird ausgenutzt, um das Betätigungselement 20 auszulösen und demgemäss das Rückflussventil 16 zu sperren. Auf diese Weise ist es also möglich, in einer Drehrichtung der Pumpe 13 die Verlängerung 5 einzufahren und gleichzeitig die Brückenplatte 1 anzuheben, ohne dazu besondere Steuermittel in Anspruch nehmen zu müssen. Dieser Bewegungsablauf kann z.B. dazu benutzt werden, um die Brückte ausser Betrieb zu nehmen. Hat die Brückenplatte 1 ihre höchste Stellung eingenommen und ist dann die Verlängerung 5 eingefahren, kann z.B. durch einen Endschalter die Brückenplatte 1 aufgrund ihres Eigengewichtes in die Null-Lage zurückgeführt werden.

Es versteht sich, dass die erfindungsgemässe Hydraulik die drei wichtigsten Bewegungsabläufe, nämlich :
1. Heben der Brückenplatte und Einfahren der Verlängerung, 2. Ausfahren der Verlängerung und 3. Senken der Brückenplatte, allein durch eine Drehrichtungsänderung der Pumpe 13 ermöglicht.

**Patentansprüche**

1. Überladebrücke für Rampen mit einer durch einen Hubzylinder (6) nach oben verschwenkbaren und durch ihr Eigengewicht absenkbaren, an ihrem rampenseitigen Ende an der Rampe angelenkten Brücke (1), die am freien Ende mit einer mittels Vorschubzylinder (8) ein- und ausfahrbaren, zur Auflage auf der zu be- bzw. entladenden Plattform dienenden Verlängerung (5) versehen ist, wobei die Rückflussleitung (7) des Hubzylinders durch ein Rückflussventil (16) absperrbar und die zur Speisung der Zylinder dienende Pumpe (P) reversierbar ist in der Weise, dass sie in der einen Drehrichtung den Vorschubzylinder (8) in die eine Richtung und in der anderen Drehrichtung den Vorschubzylinder (8) in die andere Richtung verfährt, dadurch gekennzeichnet, dass das Rückflussventil (16) hydraulisch verschliessbar und sein Betätigungsanschluss (19) mit den Zuleitungen (9, 10) des Vorschubzylinders (8) verbunden ist.

2. Überladebrücke nach Anspruch 1, dadurch gekennzeichnet, dass die Zuleitungen (9, 10) über Rückschläge (Ventil 18) derart mit dem Betätigungsanschluss (19) verbunden sind, dass bei Beaufschlagung einer Zuleitung das Druckmittel nicht in die andere Zuleitung überströmt.

3. Überladebrücke nach Anspruch 1, dadurch gekennzeichnet, dass eine Zuleitung, vorzugsweise die zum Einfahren der Verlängerung (5) dienende Zuleitung (9) über eine Drossel (22) mit der Zuleitung (7) für den Hubzylinder (6) in Wirkverbindung steht.

**Claims**

1. Ramp bridging device, comprising a bridge plate (1), which is upwardly pivotable by means of a lifting cylinder (6) and is lowerable by means of its own weight, said bridge plate being pivotally mounted on the ramp at its ramp end and being provided, at its free end, with an extension portion (5), which is retractable and extendable by means of feed cylinders (8) and is utilised for supporting purposes on the platform which is to be loaded or unloaded, wherein the return conduit (7) of the lifting cylinder can be shutoff by means of a return valve (16), and the pump (P), which serves to feed the cylinders, is reversible in such a manner that, in one direction of rotation, it moves the feed cylinder (8) into one direction and, in the other direction of rotation it moves the feed cylinder (8) into the other direction, characterised in that the return valve (16) is hydraulically closable, and its actuating connection (19) is connected to the supply conduits (9, 10) of the feed cylinder (8).

2. Bridging device according to claim 1, characterised in that the supply conduits (9, 10) are connected to the actuating connection (19) via recoils (valve 18) in such a manner that, when one supply conduit is being filled, the pressure medium does not overflow into the other supply conduit.

3. Bridging device according to claim 1, characterised in that one supply conduit, preferably the supply conduit (9) which serves to retract the extension portion (5), co-operates with the supply conduit (7) for the lifting cylinder (6) via a throttle means (22).

**Revendications**

1. Niveleur de quai comprenant un tablier (1) dont l'extrémité du côté du quai est articulée à celui-ci, qui est susceptible de basculer vers le haut sous l'action d'un vérin de levage (6) et de s'abaisser par son propre poids, et qui est muni à l'extrémité libre d'un prolongement (5) pouvant être rentré et sorti à l'aide d'un vérin d'avance (8) et destiné à s'appuyer sur la plate-forme à charger ou à décharger, le conduit de retour (7) du vérin de levage pouvant être fermé par un clapet de reflux (16) et la pompe (P) servant à alimenter le vérin pouvant être inversée de manière, dans un sens de rotation, à déplacer le vérin d'avance (8) dans un sens et, dans l'autre sens de rotation, à déplacer le vérin d'avance (8) dans le sens opposé, caractérisé en ce que le clapet de reflux (16) peut être fermé hydrauliquement et son raccord de commande (19) communique avec les conduits d'admission (9, 10) du vérin d'avance (8).

2. Niveleur de quai suivant la revendication 1, caractérisé en ce que les conduits d'admission (9, 10) communiquent, par des clapets anti-retour (clapet 18), avec le raccord de commande (19) de manière que, lorsqu'un conduit d'admission est alimenté, le fluide sous pression ne puisse pas passer dans l'autre conduit d'admission.

3. Niveleur de quai suivant la revendication 1, caractérisé en ce qu'un conduit d'admission, de préférence le conduit d'admission (9) servant à faire rentrer le prolongement (5), coopère par un étranglement (22) avec le conduit d'admission (7) du vérin de levage (6).

EP 0 284 839 B1

Fig. 1

Fig. 2